# EUROPEAN PATENT APPLICATION

(11) **EP 2 946 821 A1**
(43) Date of publication of application: **25.11.2015**
(21) Application number: 14168848.1
(22) Date of filing: 19.05.2014
(51) Int. Cl.: B01D 17/02

(54) **ARRANGEMENT FOR SEPARATING LIQUID MIXTURES BY CENTRIFUGATION EFFECT**

(71) Applicant: Sansox Oy, 00210 Helsinki (FI)
(72) Inventor: Pylkkänen, Juhani, CH-3923 Toerbel (CH); Seppälä, Mikael, 00210 Helsinki (FI)
(74) Representative: Kolster Oy Ab

(57) **Abstract**

An arrangement (100) for separating liquid mixtures. The arrangement (100) comprises a flow channel (1) having an open first end (1a) and an open second end (1b) and comprising a helix portion (2) between said ends (1a, 1b) creating a helix-shaped flow path (P). The arrangement (100) further comprises an exit channel (3) arranged to associate with the helix portion (2) in proximity of the end of and on outer circumference of said helix portion (2), so that the second end (1b) operates as a first flowing passage (F1) and the exit channel (3) operates as a second flowing passage (F2).

## Description

### Background

The invention relates to an arrangement for separating liquid mixtures.

The demand for separating liquid mixtures has been known for centuries. Plenty of solutions to the job have been presented. However, there is still demand for simple and durable solutions for separating liquid mixtures.

### Brief description

Viewed from a first aspect, there can be provided an arrangement for separating liquid mixtures, comprising a flow channel having an open first end and an open second end and comprising a helix portion between said ends, creating a helix-shaped flow path, an exit channel arranged to associate with the helix portion in proximity of the end of and on outer circumference of said helix portion, so that the second end operates as a first flowing passage and the exit channel operates as a second flowing passage.

Thereby a simple, durable and inexpensive arrangement for separating liquid mixtures may be achieved.

The arrangement is characterised by what is stated in the independent claim. Some other embodiments are characterised by what is stated in the other claims. Inventive embodiments are also disclosed in the specification and drawings of this patent application. The inventive content of the patent application may also be defined in other ways than defined in the following claims. The inventive content may also be formed of several separate inventions, especially if the invention is examined in the light of expressed or implicit sub-tasks or in view of obtained benefits or benefit groups. Some of the definitions contained in the following claims may then be unnecessary in view of the separate inventive ideas. Features of the different embodiments of the invention may, within the scope of the basic inventive idea, be applied to other embodiments.

### Brief description of figures

Some embodiments illustrating the present disclosure are described in more detail in the attached drawing, in which
Figure 1 is a schematic side view of an example arrangement,
Figures 2a and 2b are schematic front views of two alternative example arrangements,
Figure 3 is a schematic cross view of five example arrangements in partial cross-section in the extended section,
Figures 4a and 4b are schematic top and side views of another example arrangement,
Figures 5a and 5b are schematic top and side views of third example arrangement,
Figures 6a and 7b are schematic top and side views of fourth example arrangement, and
Figures 7a, 7b and 7c are schematic views of fourth example arrangement in partial cross-section.

In the figures, some embodiments are shown simplified for the sake of clarity.

### Detailed description

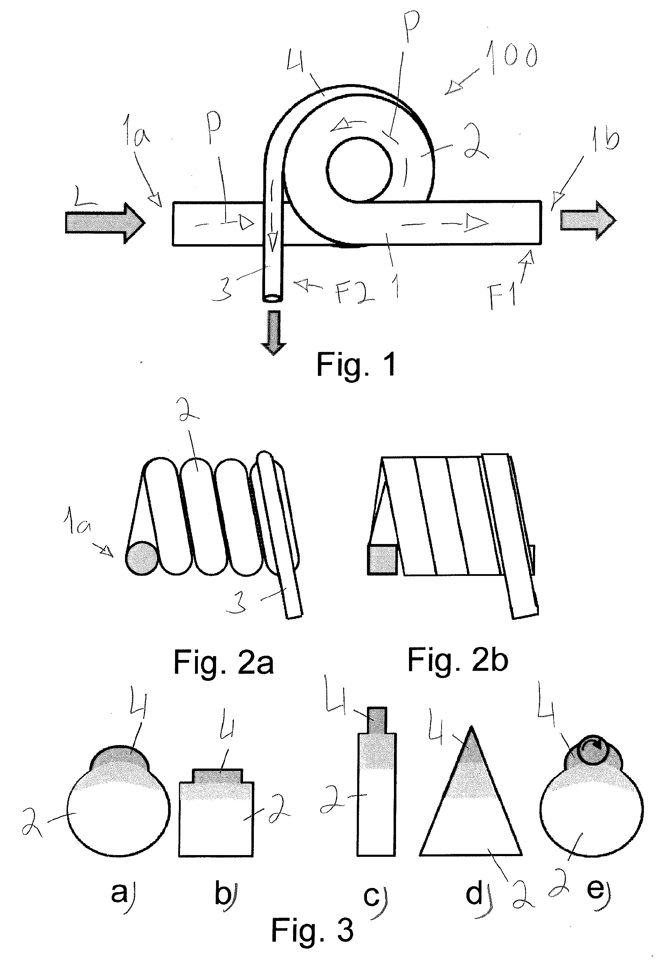

Figure 1 is a schematic side view of an example arrangement for separating liquid mixtures, and Figures 2a and 2b are schematic front views of two alternatives of the example arrangement.

The arrangement 100 comprises a flow channel 1 having an open first end 1 a and an open second end 1 b. The flow channel 1 may be manufactured from metal, plastic, composite or any other manufacturing material known per se.

The flow channel 1 comprises a helix portion 2 between the ends 1a and 1b. Thus the flow channel 1 establishes a flow path P that comprises a helix-shaped section in the helix portion.

The arrangement 100 further comprises an exit channel 3 arranged to associate with the helix portion 2. More precisely, the exit channel 3 diverges out from the outer circumference of the helix portion 2 step by step in proximity of the end of said helix portion 2. Thus the exit channel creates an extended section 4 on the outer circumference of the helix portion 2. Preferably, the exit channel 3 is arranged to diverge tangentially from the helix portion 2 and directed parallel with the direction of liquid flow. An advantage of this embodiment is that liquid or liquid mixture flowing on or at least close to the outer circumference of the helix portion 2 exits the arrangement 100 as easily as possible.

The second end 1 b creates a first flowing passage F1 whereas the exit channel 3 creates a second flowing passage F2 to the outside of the arrangement 100.

The length of the flow channel 1 and diameter of the helix portion 2 may vary depending on e.g. the characteristics of the liquid mixture L to be treated.

The inner profile of the flow channel 1, and especially of the helix portion 2, may vary.

The narrower the inner profile, the higher is the resolution of the separation process. Meanwhile, the narrower the inner profile, the higher is the risk for clogging the flow channel. Furthermore, a laminar flow is striven because it is usually a prerequisite for a successful separation process. The laminar flow is easier to achieve in a broader inner profile. Therefore, the dimensions and the profile of the flow channel 1 shall to be selected according to the characteristics of the liquid mixture L and the desired resolution of the separation process.

The inner profile shown in Figure 2a is round, whereas the profile shown in Figure 2b is square. An advantage of the round profile is that is usually most easily manufactured. The square profile is preferable when it is required an absolute laminar flow and high resolution in the separation process.

The profile may also have another shape, e.g. another polygon, ellipse etc.

The operation of the arrangement 100 may take place as follows. Liquid mixture to be separated, classified or sorted is fed in the first end 1 a as shown by arrow L. Said liquid mixture L comprises two or more components, e.g. mixture of two or more liquids, or mixture of liquid(s) and solid particles. Said component may be e.g. water.

The separation is based on the ratio of said components centrifugal force. Due to the centrifugal force, components settle down in a circumferentially organized sedimentary order where component having higher density tends to move in outer layers of sedimentary order whereas components having lower density moves over to inner layers of said sedimentary order.

Said circumferentially organized sedimentary order in liquid mixture L is created by the helix portion 2 that constrains the liquid mixture L to flow in a helical flow path.

Due to the centrifugal force, component(s) having higher density moves gradually closer and closer to the outer periphery or outer circumference of the helix portion 2. Said component(s) exit(s) from the arrangement 100 via second flowing passage F2 through the exit channel 3.

Component(s) having lower density, in the contrast, move(s) over and gradually closer and closer to the inner periphery or inner circumference of the helix portion 2. The lower density component(s) flow(s) via first flowing passage F1 and exits the arrangement 100 through the second end 1b of the flow channel.

The length of the helix portion 2 and the profile of the flow channel 1, especially the profile of the helix portion 2 and the extended section 4 determines which components will exit via first flowing passage F1 and which components via second flowing passage F2.

The force constraining the liquid mixture L to flow in the arrangement 100 may be created various ways. There may be one or more pump(s) connected to the arrangement 100 which are arranged to pump the liquid mixture through the arrangement 100. According to another embodiment, earth gravity may constrain the liquid mixture to flow through the arrangement 100. Also a combination of one or more pump(s) and earth gravity can be used.

In general, the centrifugal force should be greater than the force of gravity. Furthermore, the total force affecting the liquid mixture L is a combination of force of gravity and centrifugal force.

Figure 3 is a schematic cross view of helix portions of five example arrangements in partial cross-section.

The embodiment a) has a round profile with round profiled extended section 4.

The embodiment b) has a square profile with rectangular profiled extended section 4.

The embodiment c) has a rectangular profile with rectangular extended section 4.

The embodiment d) has a triangle profile with triangle profiled extended section 4.

The embodiment e) has a round profile with round profiled extended section 4. The extended section may comprise one or more control vane(s) 10. The control vane 10 makes a controlled vortex in the flow that may facilitate the separation and dividing the flow. It may also facilitate a further processing of the liquid mixture L.

The extended section 4 of the embodiments a) - c) and e) has a profile which is clearly distinguishable from the profile of the helix portion 2, whereas the extended section 4 of the embodiment d) extends smoothly from the profile of the helix portion 2.

The profile of the embodiments c) and d) is preferable when a high resolution in the circumferentially organized sedimentary order is needed. The high resolution is needed e.g. when the specific gravity differences of the components of the liquid mixture L are small, and/or when a strict separation is needed, and/or when especially valuable or harmful particles have to be separated from the liquid mixture L.

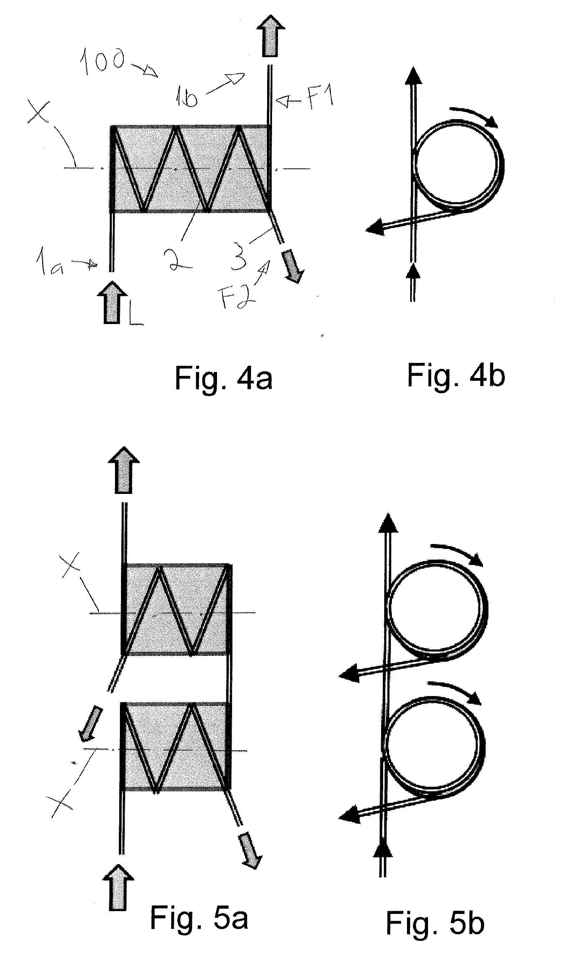

Figures 4a and 4b are schematic top and side views of another example arrangement. The helix axis X is arranged here in a horizontal position. In this embodiment, flow velocity of the liquid mixture has to be high enough for generating centrifugal force that is at least equal to earth gravity, preferably substantially higher than earth gravity.

According to an embodiment, the loops or turns of the helix portion 2 have not equal diameters. For example, the diameter of the first loop(s) may be greater than the loop(s) arranged subsequently. According to an idea, the diameter of the first loop(s) and the last loop(s) is greater than the diameter of the loop(s) arranged in the middle of the helix portion 2. The smaller is the diameter, the greater is the centrifugal force. On the other hand, greater diameter of the helix may steady the flow.

Figures 5a and 5b are schematic top and side views of third example arrangement. The arrangement 100 may comprise at least two helix portions 2 are arranged in series. The embodiment shown here comprises two helixes 2 the axis X of which is arranged in a horizontal position. Multiple helix portions 2 may improve the resolution and separation of the components of the liquid mixture L.

The two or more helix portions 2 may be identical or may diverse in their design or dimensions.

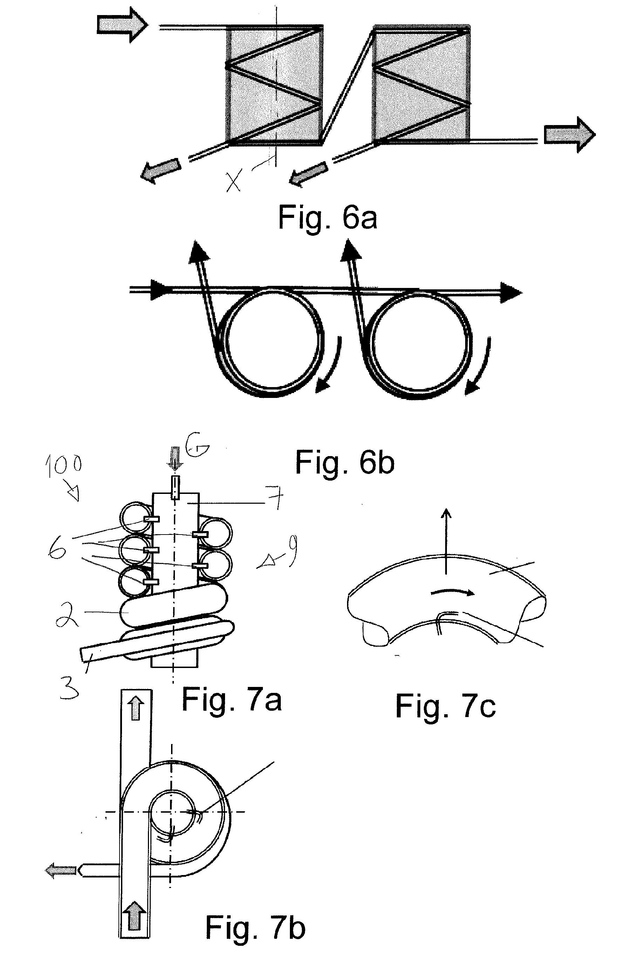

Figures 6a and 6b are schematic top and side views of fourth example arrangement. The helix axis X of the helix portions 2 is arranged here in a vertical position. The vertical position is especially suitable embodiment in cases where flow velocity of the liquid mixture is low.

The two or more helix portions 2 may be identical or may diverse in their design or dimensions.

It is to be noted that the arrangement 100 may also comprise only one helix portion 2 arranged in a vertical position.

According to an embodiment, the helix axis X may also be arranged in a position between horizontal and vertical position. According to another embodiment, the arrangement 100 comprises at least two helix portions 2 the helix axis X of which being arranged in different positions, e.g. one in a horizontal position and another in a vertical position etc.

Figures 7a, 7b and 7c are schematic views of fourth example arrangement in partial cross-section. The arrangement 100 is provided with means 9 for feeding gaseous additive G into the liquid mixture L. The gaseous additive G may be e.g. oxygen, nitrogen, ozone etc. The gaseous additive G may also be a mixture of two or more gases, such as air etc. The gaseous additive G mixes and dissolves efficiently with the liquid mixture L in the helical flow path.

Air and oxygen fed in the liquid mixture L oxidize the mixture. This has been observed to facilitate the separation of particles, e.g. metals, from the liquid mixture L.

Said means 9 may comprise at least one ejector conduit 6 arranged in the helix portion 2. The ejector conduits 6 feed the gaseous additive G into the liquid mixture L. Said ejector conduits 6 are preferably arranged in the inner circumference of the helix portion 2 as shown in Figures 7a - 7C, because the pressure of the liquid mixture L is at its lowest in proximity of said inner circumference.

In the embodiment shown in Figures 7a - 7C, the ejector conduits 6 are connected to a gas chamber 7 that is arranged inside the helix portion 2. The gas chamber 7 receives the gaseous additive G and distributes it in all the ejector conduits 6.

The suction effect of the liquid mixture L passing the ejector conduit may be the only force that forces the gaseous additive G into the liquid mixture L. This is a very simple and inexpensive feeding system. In another embodiment the gaseous additive G is pressurized prior to feeding into the liquid mixture L in order to intensify flow of gas into liquid mixture L.

According to an idea, the helix portion 2 comprises a wear resistive inner coating 5. The inner coating 5 may cover only the inner surface of the outer circumference of the helix portion 2 or, alternatively, the inner coating may cover all inner surfaces of the helix portion 2. The inner coating 5 can be made of e.g. polymer material, such as rubber or plastic.

The arrangement may have one or more of the next advantages:
- The energy consumption is low, especially when the earth gravity is utilized.
- There are no moving components in the arrangement; therefore the operating life is long.
- The structure of the arrangement is simple, durable and inexpensive to manufacture and to maintain.
- The arrangement is easy to maintain and keep clean.
- The arrangement is easy to install.
- Use of environmentally harmful fuels and lubricants can be avoided.

The invention is not limited solely to the embodiments described above, but instead many variations are possible within the scope of the inventive concept defined by the claims below. Within the scope of the inventive concept the attributes of different embodiments and applications can be used in conjunction with or replace the attributes of another embodiment or application.

The drawings and the related description are only intended to illustrate the idea of the invention. The invention may vary in detail within the scope of the inventive idea defined in the following claims.

### Reference symbols

- 1: flow channel
- 1a: first end
- 1b: second end
- 2: helix portion
- 3: exit channel
- 4: extended section
- 5: inner coating
- 6: ejector conduit
- 7: gas chamber
- 8: pressurizing means
- 9: means for feeding gaseous additive
- 10: control vane
- 100: arrangement

- L: liquid mixture
- F1: first flowing passage
- F2: second flowing passage
- G: gaseous additive
- P: flow path
- X: helix axis

## Claims

1. An arrangement (100) for separating liquid mixtures, comprising
a) a flow channel (1) having an open first end (1a) and an open second end (1 b) and comprising
b) a helix portion (2) between said ends (1a, 1b), creating a helix-shaped flow path (P),
c) an exit channel (3) arranged to associate with the helix portion (2) in proximity of the end of and on outer circumference of said helix portion (2), so that the second end (1b) operates as a first flowing passage (F1) and the exit channel (3) operates as a second flowing passage (F2).

2. The arrangement as claimed in claim 1, wherein the inner profile of the helix portion (2) is round.

3. The arrangement as claimed in claim 1, wherein the inner profile of the helix portion (2) is polygon.

4. The arrangement as claimed in any of the preceding claims, wherein the helix portion (2) comprises an extended section (4) on its outer circumference, and the exit channel (3) is arranged to associate with said extended section (4).

5. The arrangement as claimed in any of the preceding claims, wherein the helix axis (X) is arranged in horizontal position.

6. The arrangement as claimed in any of the claims 1 - 4, wherein the helix axis (X) is arranged in vertical position.

7. The arrangement as claimed in any of the claims 1 - 4, wherein the helix axis (X) is arranged in a position between horizontal and vertical position.

8. The arrangement as claimed in any of the preceding claims, wherein the exit channel (3) is arranged tangentially and in the direction of flow path (P) to the helix portion (2).

9. The arrangement as claimed in any of the preceding claims, wherein at least two helix portions (2) are arranged in series.

10. The arrangement as claimed in any of the preceding claims, wherein the helix portion (2) comprises a wear resistive inner coating (5).

11. The arrangement as claimed in any of the preceding claims, wherein the helix portion (2) comprises at least one ejector conduit (6) for feeding gaseous additive (G) into the liquid mixture (L).

12. The arrangement as claimed in claim 11, wherein the ejector conduit (6) is arranged in the inner circumference of the helix portion (2).

13. The arrangement as claimed in any of the claims 11 - 12, wherein the ejector conduit (6) is connected to a gas chamber (7) arranged inside the helix portion (2).

14. The arrangement as claimed in any of the claims 11 - 13, comprising pressurizing means (8) for pressurizing the gaseous additive (G) prior to feeding into the liquid mixture (L).
